# EUROPEAN PATENT APPLICATION

(11) **EP 4 847 288 A1**
(43) Date of publication of application: **02.12.2026**
(21) Application number: 26180461.1
(22) Date of filing: 22.05.2026
(51) Int. Cl.: B60K 1/04, B62D 21/15, B62D 25/02, B62D 25/20, H01M 50/242

(54) **VEHICLE LOWER PORTION STRUCTURE**

(30) Priority: 26.05.2025 JP 2025087360
(71) Applicant: Toyota Jidosha Kabushiki Kaisha, Toyota-shi, Aichi-ken 471-8571 (JP)
(72) Inventor: HIGASHIHARA, Katsunori, TOYOTA-SHI, AICHI-KEN, 471-8571 (JP)
(74) Representative: Cabinet Beau de Loménie

(57) **Abstract**

A vehicle lower portion structure including: a battery pack (12) disposed at a lower portion of a vehicle; and a plate member (30) that is disposed at an upper side of the battery pack (12) and at which concave portions (48, 50), which are concave toward an upper side or a lower side in a vehicle vertical direction, extend in a vehicle transverse direction, wherein thick portions (56A), which make a plate thickness of the plate member (30) thick, are provided at the concave portions (48, 50) at a vehicle transverse direction outer side of an upper surface of the battery pack (12) as seen in a vehicle plan view.

## Description

### BACKGROUND

### Technical Field

The present disclosure relates to a vehicle lower portion structure.

### Related Art

Japanese Patent Application Laid-Open (JP-A) No. 2024-140735 discloses a technique relating to a battery case (a battery pack) for an automobile. In this related art, a pair of side sills extend in the vehicle longitudinal direction at the both vehicle transverse direction outer sides of the battery pack respectively. The battery case has an upper cover (upper case) that structures the upper portion side of an accommodating portion that accommodates the batteries. An upper-surface outer-side lateral reinforcing member, which extends in the vehicle transverse direction from the left end to the right end of the accommodating portion, is provided at the upper surface of the upper cover. In this related art, owing to the upper-surface outer-side lateral reinforcing member, a load transmission path can be provided in the vehicle transverse direction, and a high battery protecting performance with respect to impact in the vehicle transverse direction can be ensured.

However, in the above-described related art, if a vehicle transverse direction end portion of the upper-surface outer-side lateral reinforcing member (plate member) bends due to the input of load from a barrier (a collision body) in the initial stage of a side collision, there is the possibility that the side sill (rocker) will penetrate in toward the battery side.

### SUMMARY

The present disclosure provides a vehicle lower portion structure that, at the time of a side collision of a vehicle, can suppress bending of a vehicle transverse direction end portion of a plate member and can protect a battery pack.

A vehicle lower portion structure relating to a first aspect has: a battery pack disposed at a lower portion of a vehicle; and a plate member that is disposed at an upper side of the battery pack and at which concave portions, which are concave toward an upper side or a lower side in a vehicle vertical direction, extend in a vehicle transverse direction, wherein thick portions , which make a plate thickness of the plate member thick, are provided at the concave portions at a vehicle transverse direction outer side of an upper surface of the battery pack as seen in a vehicle plan view.

The vehicle lower portion structure relating to the first aspect has the battery pack and the plate member. The battery pack is disposed at the lower portion of the vehicle, and the plate member is disposed at the upper side of the battery pack. Concave portions, which are concave toward an upper side or a lower side in a vehicle vertical direction, extend in a vehicle transverse direction at the plate member, and these concave portions have thick portions. The thick portions are provided at a vehicle transverse direction outer side of the upper surface of the battery pack (a vehicle transverse direction end portion of the plate member) as seen in a vehicle plan view. The plate thickness of the plate member becomes thick due to these thick portions.

As described above, in the present aspect, due to the concave portions that extend in the vehicle transverse direction being provided at the plate member, the rigidity of the plate member itself with respect to the vehicle transverse direction can be increased, and the rigidity of the plate member with respect to load inputted from the vehicle upper side also can be increased. Further, by providing the thick portions at the concave portions at a vehicle transverse direction end portion of the plate member, the rigidity at the vehicle transverse direction end portion of the plate member can be increased more, and, at the time of a side collision of the vehicle, bending of the vehicle transverse direction end portion of the plate member can be suppressed.

In this way, in the present aspect, the plate thickness of the plate member thick is increased by the thick portions, the section modulus can be raised, and the allowable bending moment of the plate member can be increased, and therefore, as a result, the bending strength of the plate member can be improved. Further, in the present aspect, because the thick portions are provided at a vehicle transverse direction outer side of the upper surface of the battery pack as seen in a vehicle plan view, at the time of a side collision of the vehicle, load of the initial stage of the collision can be suppressed so as to not be inputted toward the battery pack side.

Note that the "thick portion" is provided integrally with or as a body separate from the concave portion of the plate member. Further, "a vehicle transverse direction outer side of an upper surface of the battery pack as seen in a vehicle plan view" here means a case in which, as seen in a vehicle plan view, the thick portion is provided further toward the vehicle transverse direction outer side than the upper surface of the battery pack and does not overlap the upper surface of the battery pack, and, in addition thereto, a case in which the thick portion overlaps a portion of the upper surface of the battery pack.

Further, with regard to the "upper surface of the battery pack", generally, a battery pack is structured by an upper case and a lower case, and the upper surface of the battery pack means the upper surface of the upper wall portion of the upper case. However, in a case in which a flange portion is provided at the outer edge portion of the upper case, there are also cases in which the upper surface of the battery pack means the upper surface of the flange portion. In this case, there is a structure in which, as seen in a vehicle plan view, the thick portion is further toward a vehicle transverse direction outer side than the flange portion of the battery pack or overlaps a portion of the flange portion of the battery pack.

In a vehicle lower portion structure relating to a second aspect, in the vehicle lower portion structure relating to the first aspect, the thick portions are provided as bodies separate from the plate member.

In the vehicle lower portion structure relating to the second aspect, due to the thick portions being provided as bodies separate from the plate member and the thick portions being fixed to the concave portions, the bending rigidity of the plate member can be improved by a simple structure.

In a vehicle lower portion structure relating to a third aspect, in the vehicle lower portion structure relating to the first aspect or the second aspect, the thick portions extend to positions overlapping the upper surface of the battery pack as seen in a vehicle plan view.

In the vehicle lower portion structure relating to the third aspect, due to the thick portions extending to positions overlapping the upper surface of the battery pack as seen in a vehicle plan view, at the plate member, the bending strength all the way to the battery pack side can be improved. Due thereto, at the time of a side collision of the vehicle, the load of the initial stage of the collision can be further suppressed so as to not be inputted toward the battery pack side.

In a vehicle lower portion structure relating to a fourth aspect, in the vehicle lower portion structure relating to any one of the first aspect through the third aspect, each thick portion is provided at plural walls that structure a concave portion.

In the vehicle lower portion structure relating to the fourth aspect, due to the thick portion being provided at plural walls that structure the concave portion, each wall at which the thick portion is provided has a greater thickness, and the concave portion can be reinforced.

In a vehicle lower portion structure relating to a fifth aspect, in the vehicle lower portion structure relating to any one of the first aspect through the fourth aspect, each thick portion is formed in a shape that is connected to a pair of side walls, which structure a concave portion and face one another, and to a bottom wall that connects the pair of side walls.

In the vehicle lower portion structure relating to the fifth aspect, the thick portion is formed in a shape that is connected to the pair of side walls, which structure the concave portion and face one another, and to the bottom wall that connects the pair of side walls. Due to the pair of side walls and the bottom wall being connected via the thick portion, the concave portion can be reinforced.

In a vehicle lower portion structure relating to a sixth aspect, in the vehicle lower portion structure relating to any one of the first aspect through the fifth aspect, the plural concave portions are provided in a vehicle longitudinal direction.

In the vehicle lower portion structure relating to the sixth aspect, by providing the plural concave portions in the vehicle longitudinal direction of the plate member, the rigidity of the plate member itself improves as compared with a case in which only one concave portion is formed.

In a vehicle lower portion structure relating to a seventh aspect, in the vehicle lower portion structure relating to any one of the first aspect through the sixth aspect, the concave portions are formed continuously in a wavy shape along a vehicle longitudinal direction.

In the vehicle lower portion structure relating to the seventh aspect, due to the concave portions being formed continuously in a wavy shape along the vehicle longitudinal direction of the plate member, the rigidity of the plate member itself further improves.

In a vehicle lower portion structure relating to an eighth aspect, in the vehicle lower portion structure relating to any one of the first aspect through the seventh aspect, the thick portions are provided respectively within concave portions that are concave toward the lower side in the vehicle vertical direction.

In the vehicle lower portion structure relating to the eighth aspect, the thick portions are provided respectively within the concave portions that are concave toward the lower side in the vehicle vertical direction, and the rigidity can be improved at these plural concave portions respectively.

In a vehicle lower portion structure relating to a ninth aspect, the vehicle lower portion structure relating to any one of the first aspect through the eighth aspect has a connecting portion that connects the plural thick portions.

In the vehicle lower portion structure relating to the ninth aspect, by providing the connecting portion that connects the plural thick portions, the plural thick portions can substantially simultaneously be placed in the plural concave portions, and the mass producibility improves.

In a vehicle lower portion structure relating to a tenth aspect, the vehicle lower portion structure relating to any one of the first aspect through the ninth aspect has a cover that is shaped as a flat plate and covers the plate member from the upper side in the vehicle vertical direction.

In the vehicle lower portion structure relating to the tenth aspect, the cover, which is shaped as a flat plate and covers the plate member from the upper side in the vehicle vertical direction, is provided. Due thereto, it can be made such that the heel of a shoe of a passenger or the like does not enter into the concave portions. Further, owing to the cover, the concave portions have closed cross-sectional portions. At the plate member, the rigidity improves more, and the load transmitting performance at the time of a side collision of the vehicle improves.

In a vehicle lower portion structure relating to an eleventh aspect, the vehicle lower portion structure relating to the ninth aspect has a cover that is shaped as a flat plate and covers the plate member from the upper side in the vehicle vertical direction, wherein the cover is disposed between a pair of the connecting portions that are provided at both vehicle transverse direction end portions of the plate member.

In the vehicle lower portion structure relating to the eleventh aspect, the cover, which is shaped as a flat plate and covers the plate member from the upper side in the vehicle vertical direction, is provided. This cover is disposed between a pair of the connecting portions that are provided at the both end portions in the vehicle transverse direction of the plate member. Due to the cover and the connecting portions being formed to have the same plate thicknesses, the floor surface can be formed in a flat shape.

In a vehicle lower portion structure relating to a twelfth aspect, in the vehicle lower portion structure relating to any one of the first aspect through the eleventh aspect, each thick portion is fixed to the plate member via a foamed body.

In the vehicle lower portion structure relating to the twelfth aspect, due to the thick portion being fixed to the plate member via a foamed body, the thick portion can be fit tightly within the concave portion via the foamed body, and the rigidity can be improved as compared with a case in which there is a gap between the thick portion and the plate member.

In a vehicle lower portion structure relating to a thirteenth aspect, in the vehicle lower portion structure relating to any one of the first aspect through the twelfth aspect, the foamed body is filled between a concave portion and the thick portion.

In the vehicle lower portion structure relating to the thirteenth aspect, the foamed body is filled between the concave portion and the thick portion, and the thick portion is fit tightly within the concave portion via the foamed body.

As described above, the vehicle lower portion structure relating to the present disclosure can, at the time of a side collision of a vehicle, can suppress bending of the vehicle transverse direction end portion of the plate member and can protect the battery pack.

### BRIEF DESCRIPTION OF THE DRAWINGS

An exemplary embodiment of the present disclosure will be described in detail based on the following figures, wherein:
Fig. 1 is a schematic drawing schematically illustrating a state in which a battery pack is installed in a vehicle to which a vehicle lower portion structure relating to a present embodiment is applied;
Fig. 2 is a perspective view of the battery pack that is installed in the vehicle to which the vehicle lower portion structure relating to the present embodiment is applied;
Fig. 3 is a cross-sectional view illustrating the structure of a floor portion that is cut along line A-A of Fig. 2;
Fig. 4 is an exploded perspective view of a lower board of the floor portion and thick portions of the vehicle to which the vehicle lower portion structure relating to the present embodiment is applied;
Fig. 5 is a perspective view illustrating modified example 1 of the lower board of the floor portion and the thick portions of the vehicle to which the vehicle lower portion structure relating to the present embodiment is applied;
Fig. 6 is a perspective view illustrating modified example 2 of the lower board of the floor portion and the thick portions of the vehicle to which the vehicle lower portion structure relating to the present embodiment is applied;
Fig. 7 is a perspective view illustrating modified examples 3 through 5 of the lower board of the floor portion and the thick portions of the vehicle to which the vehicle lower portion structure relating to the present embodiment is applied;
Fig. 8 is a perspective view illustrating modified example 6 of the lower board of the floor portion and the thick portion of the vehicle to which the vehicle lower portion structure relating to the present embodiment is applied;
Fig. 9 is a perspective view illustrating modified example 7 of the lower board of the floor portion and the thick portion of the vehicle to which the vehicle lower portion structure relating to the present embodiment is applied;
Fig. 10 is a perspective view illustrating modified example 8 of the lower board of the floor portion and the thick portions of the vehicle to which the vehicle lower portion structure relating to the present embodiment is applied; and
Fig. 11 is a schematic sectional view of a comparative example and illustrates a state in which an end portion of a floor portion is bent at the time of a side collision of a vehicle.

### DETAILED DESCRIPTION

A vehicle to which a vehicle lower portion structure relating to an embodiment of the present disclosure is applied is described hereinafter by using the drawings. Note that arrow UP and arrow RH that are shown appropriately in the respective drawings indicate the vehicle upward direction and rightward direction, respectively. Hereinafter, when description is given by using merely longitudinal (front-rear), left-right and vertical (up-lower) directions, they refer to the longitudinal of the vehicle longitudinal direction, the left and right of the vehicle left-right direction (vehicle transverse direction), and the vertical of the vehicle vertical direction, unless otherwise specified. Further, there are cases in which some reference numerals are omitted from the respective drawings in order to make the drawings easy to understand.

### Structure of Vehicle Lower Portion Structure

First, the structure of the vehicle lower portion structure is described.

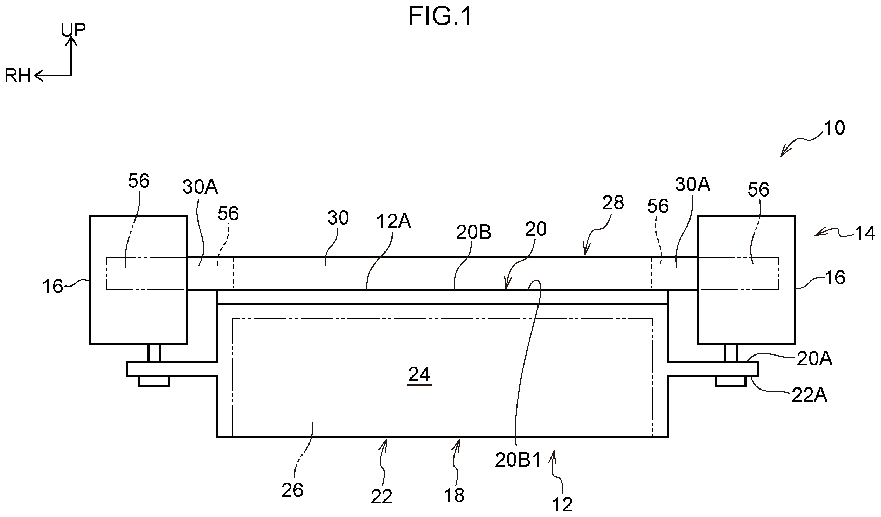

Fig. 1 is a schematic drawing schematically illustrating a state in which a battery pack 12 is installed in a vehicle 10 to which a vehicle lower portion structure relating to a present embodiment is applied. Note that the vehicle 10 is, for example, an electric vehicle, a gasoline-hybrid vehicle or a fuel cell hybrid vehicle that travels by using a motor as the driving source thereof.

As illustrated in Fig. 1, the vehicle 10 includes a pair of left and right rockers 16 that extend along the vehicle longitudinal direction at a lower portion 14 of the vehicle 10 (hereinafter called "vehicle lower portion 14"), and that are disposed at the vehicle transverse direction both sides. The battery pack 12 is supported by the pair of left and right rockers 16.

The battery pack 12 has a battery case 18 that is formed in the shape of a box whose length direction is the vehicle longitudinal direction and that is flat in the vehicle vertical direction. The battery case 18 is structured to include an upper case 20 and a lower case 22. The upper case 20 and the lower case 22 are formed by, for example, plate members formed of a light metal such as an aluminum alloy being press molded.

The cross-sectional shapes, which are cut along the vehicle transverse direction and vehicle vertical direction, of the upper case 20 and the lower case 22 are hat-shaped. The lower side of the upper case 20 is open, and a flange portion 20A juts out from the open end toward the outer side of the upper case 20. Further, the upper side of the lower case 22 is open, and a flange portion 22A juts out from the open end toward the outer side of the lower case 22.

Plural battery cells 26 that are prismatic are accommodated within a space portion 24 formed by the upper case 20 and the lower case 22. Further, the flange portion 20A formed at the upper case 20 and the flange portion 22A formed at the lower case 22 are joined together, and the interior of the space portion 24 is sealed.

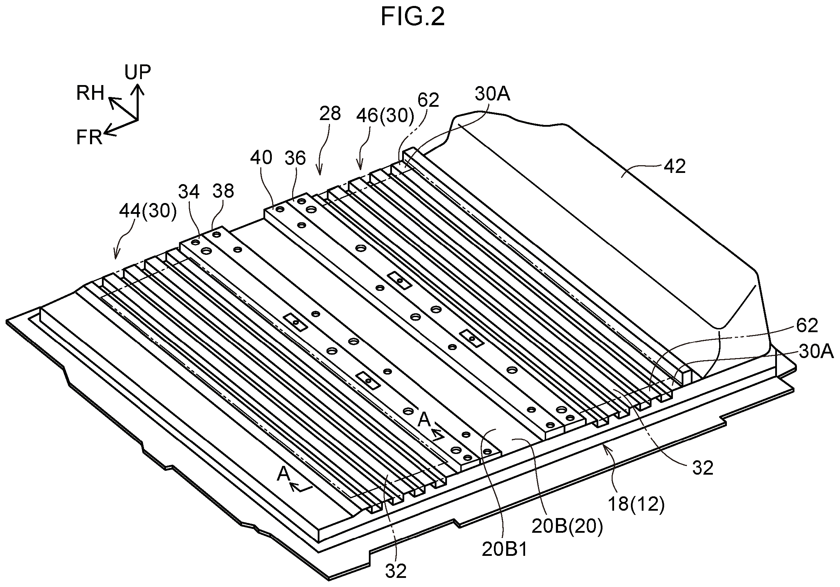

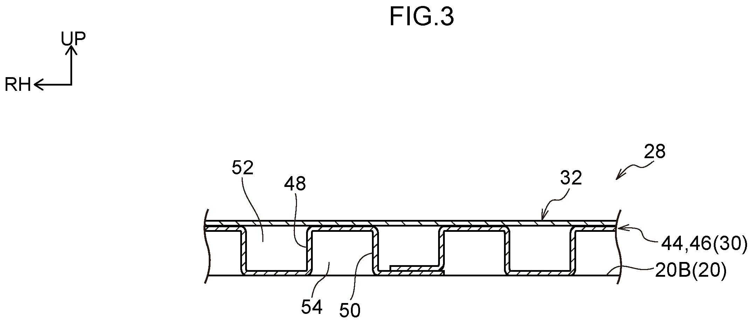

Here, in the present embodiment, as illustrated in Fig. 2 and Fig. 3, upper wall portion 20B of the upper case 20 structures the base portion of a floor portion 28. A lower board (plate member) 30 and upper boards (covers) 32 are provided at the upper side of the upper wall portion 20B of the upper case 20.

Namely, in the present embodiment, the floor portion 28 is structured to include the upper wall portion 20B of the upper case 20, the lower board 30, and the upper boards 32. The lower board 30 and the upper boards 32 are, for example, formed of a metal such as steel plates. Note that a floor panel may, of course, be provided separately from the upper wall portion 20B of the upper case 20.

Fig. 2 is a perspective view in which the battery pack 12 is seen from the upper side and an obliquely front left side of the vehicle. The upper boards 32 are illustrated by the two-dot chain lines in Fig. 2. As illustrated in Fig. 2, seat cross members 34, 36 that support front seats (not illustrated) are disposed front and back in the vehicle longitudinal direction at the vehicle longitudinal direction substantially central portion of the floor portion 28.

The seat cross members 34, 36 respectively extend along the vehicle transverse direction, and the vehicle transverse direction (extending direction) both end portions thereof are joined (connected) to the rockers 16 respectively by welding or bolts or the like. Note that, although not illustrated, the seat cross members 34, 36 may be joined to the rockers 16 respectively via brackets or the like.

A cross member 38 is provided adjacent to the seat cross member 34 at the vehicle rear side of the seat cross member 34. Further, a cross member 40 is provided adjacent to the seat cross member 36 at the vehicle front side of the seat cross member 36. The cross member 38 and the cross member 40 are disposed so as to be apart from one another, and the battery pack 12 is fastened to the cross members 38, 40. Note that the battery pack 12 can be fastened to the seat cross members 34, 36 as well. Further, the seat cross member 34 and the cross member 38 may be formed integrally, and the seat cross member 36 and the cross member 40 may be formed integrally.

An accessories cover 42, that accommodates accessories such as an ECU that controls driving of the vehicle 10, is provided at the floor portion 28 at the rear side of the seat cross member 36. A rear seat (not illustrated) is supported by the accessories cover 42.

On the other hand, the lower board 30 is formed in the shape of a plate that extends in the vehicle transverse direction and the vehicle longitudinal direction. The lower board 30 is structured to include a front side lower board 44 disposed further toward the vehicle longitudinal direction front side than the seat cross member 34, and a rear side lower board 46 disposed further toward the vehicle longitudinal direction rear side than the seat cross member 36. Note that the front side lower board 44 and the rear side lower board 46 may be formed integrally. Further, the front side lower board 44 and the rear side lower board 46 may be structured by plural plate members in the vehicle longitudinal direction.

Here, as illustrated in Fig. 3, concave portions 48 that are concave toward the vehicle vertical direction upper side and concave portions 50 that are concave toward the vehicle vertical direction lower side are formed continuously in a wavy shape along the vehicle longitudinal direction at the front side lower board 44 and the rear side lower board 46. The concave portions 48, 50 are formed over the substantial entireties in the vehicle transverse direction of the front side lower board 44 and the rear side lower board 46.

Note that description is given here of a case in which the concave portions 48 and the concave portions 50 are formed continuously in a wavy shape. However, if the upper wall portion 20B of the upper case 20 is used as a reference, only convex portions (the concave portions 50) are formed at the front side lower board 44 and the rear side lower board 46. If the upper boards 32 are used as a reference, only the concave portions 48 are formed at the front side lower board 44 and the rear side lower board 46.

The upper boards 32 are provided above the lower board 30. The upper boards 32 are formed in the shapes of flat plates that extend in the vehicle transverse direction and the vehicle longitudinal direction. The concave portions 48 are closed off as closed cross-sectional portions 52 by the upper boards 32, and the upper surface of the floor portion 28 is formed in a flat shape. Note that the concave portions 50 are closed off as closed cross-sectional portions 54 by the upper wall portion 20B of the upper case 20.

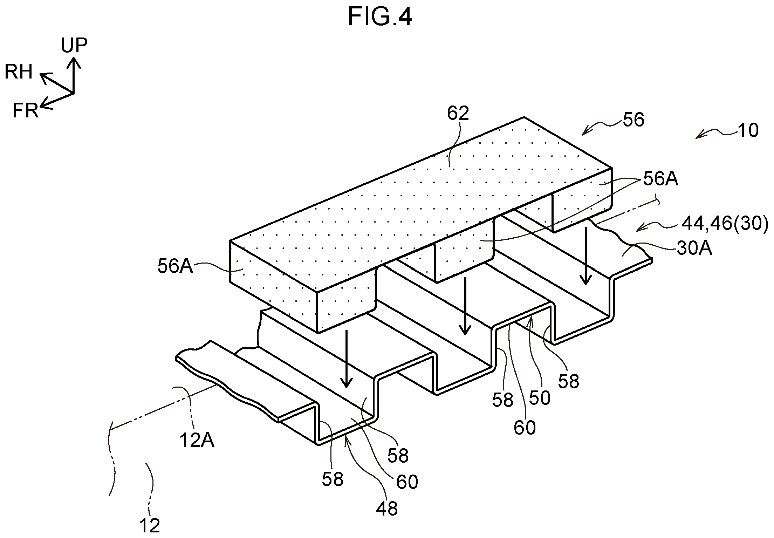

In the present embodiment, as illustrated in Fig. 4, thick members 56 that increase the plate thickness of the lower board 30 are respectively provided at both end portions 30A in the vehicle transverse direction of the front side lower board 44 and the rear side lower board 46 (the lower board 30). Note that the surfaces of the thick members 56 are marked with dots in order to differentiate them from other members.

As illustrated in Fig. 1, these thick members 56 are provided at the both vehicle transverse direction outer sides of an upper surface 12A of the battery pack 12 (upper surface 20B1 of the upper wall portion 20B of the upper case 20) as seen in a vehicle plan view. Note that, as illustrated in Fig. 1, if the flange portion 20A is provided at the upper case 20 of the battery pack 12, the end portions 30A of the lower board 30 may be disposed at the both vehicle transverse direction outer sides of the flange portion 20A of the upper case 20 as seen in a vehicle plan view. Accompanying this, the range at which the thick members 56 are provided also changes.

The thick member 56 illustrated in Fig. 4 is structured by plural (three as an example in Fig. 4) thick portions 56A that are disposed along the vehicle longitudinal direction. For example, the thick portions 56A are formed by hard resin members, and are formed in substantially rectangular parallelopiped shapes, and can be fit into the concave portions 48.

Each of the concave portions 48 is structured to include a pair of side wall portions 58 disposed at the vehicle front and rear sides and facing one another, and a bottom wall portion 60 connecting the lower ends of the pair of side wall portions 58 together. Therefore, the thick portion 56A is formed to be a size such that it can abut the pair of side wall portions 58 and the bottom wall portion 60 that structure the concave portion 48. Note that the concave portions 50 have the same structures as the concave portions 48.

On the other hand, the plural thick portions 56A are connected by a connecting portion 62 that is plate-shaped. The thick portions 56A are fit into the concave portions 48 respectively in states in which the connecting portion 62 planarly contacts the bottom wall portions 60 of the concave portions 50. Note that, as illustrated by the two-dot chain lines in Fig. 2, the upper boards 32 are disposed between the pairs of connecting portions 62 that are provided at the both end portions of the lower board 30. Further, the upper boards 32 and the connecting portions 62 are formed to have substantially the same plate thicknesses.

### Operation and Effects of Vehicle Lower Portion Structure

Operation and effects of the vehicle lower portion structure are described next.

As illustrated in Fig. 1, in the vehicle 10 to which the vehicle lower portion structure relating to the present embodiment is applied, the lower board 30 is provided at the upper side of the battery pack 12 that is disposed at the vehicle lower portion 14. This lower board 30 is structured to include the front side lower board 44 and the rear side lower board 46. The concave portions 48 that are concave toward the vehicle vertical direction upper side and the concave portions 50 that are concave toward the vehicle vertical direction lower side are formed continuously in a wavy shape along the vehicle longitudinal direction at the front side lower board 44 and the rear side lower board 46.

The concave portions 48, 50 are formed over the substantial entireties in the vehicle transverse direction of the lower board 30. The thick portions 56A are provided within the concave portions 48 at the end portions 30A of the lower board 30. Note that these thick portions 56A are provided further toward the both vehicle transverse direction outer sides than the upper surface 12A of the battery pack 12 as seen in a vehicle plan view, and the plate thickness of the lower board 30 is increased by these thick portions 56A.

In this way, in the present embodiment, due to the concave portions 48, 50 that extend in the vehicle transverse direction being provided at the lower board 30, the rigidity of the lower board 30 itself with respect to the vehicle transverse direction can be increased, and the rigidity of the lower board 30 with respect to load inputted from the vehicle upper side also can be increased.

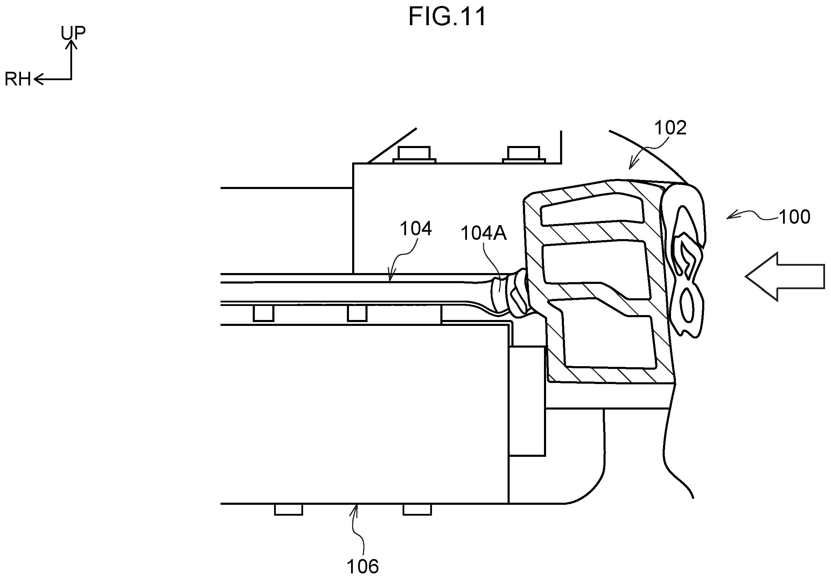

Here, as illustrated in Fig. 11 as a comparative example, when load from a barrier (a collision body) is inputted to a rocker 102 at the time of a side collision of a vehicle 100, load is transmitted via the rocker 102 toward a floor portion 104 side. At this time, if end portion 104A in the vehicle transverse direction of the floor portion 104 is bent, there is the possibility that the rocker 102 will penetrate in toward a battery pack 106 side.

In contrast, in the present embodiment, as illustrated in Fig. 2 and Fig. 4, the thick portions 56A are provided within the concave portions 48 at the end portions 30A of the lower board 30. Due thereto, in the present embodiment, the rigidity of the end portions 30A of the lower board 30 can be increased more, and bending of the end portions 30A of the lower board 30 at the time of a side collision of the vehicle 10 can be suppressed.

In this way, in the present embodiment, the plate thicknesses of the concave portions 48 of the lower board 30 is increased by the thick portions 56A, the allowable bending moment of the lower board 30 can be increased, and, as a result, the bending strength of the lower board 30 can be improved. Due thereto, in the present embodiment, bending of the end portion 30A of the lower board 30 at the time of a side collision of the vehicle 10 can be suppressed.

Further, in the present embodiment, because the thick portions 56A are provided at the vehicle transverse direction outer sides of the upper surface 12A of the battery pack 12 as seen in a vehicle plan view, at the time of a side collision of the vehicle 10, there is the possibility that, even at regions where the seat cross members 34, 36 do not exist, the load of the initial stage of the collision will be suppressed so as to not be inputted toward the battery pack 12 side.

Moreover, in the present embodiment, due to the thick portions 56A being provided at the end portions 30A of the lower board 30, input of load of the initial stage of a collision toward the battery pack 12 side is suppressed. Therefore, lightening of the weight of the vehicle 10 can be devised as compared with a case in which the entire lower board 30 is reinforced.

Further, in the present embodiment, the thick portions 56A are provided as bodies separate from the lower board 30. Therefore, by fixing the thick portions 56A to the concave portions 48, the bending strength of the lower board 30 can be improved by a simple structure. Due to the thick portions 56A being provided separately from the lower board 30 in this way, the thick portions 56A can be formed of a material different than that of the lower board 30.

The shape of the thick portion 56A is described concretely here. In the present embodiment, the concave portion 48 is structured to include the pair of side wall portions 58 and the bottom wall portion 60. The thick portion 56A is formed so as to be a size such that it can abut the pair of side wall portions 58 and the bottom wall portion 60 of the concave portion 48. Therefore, the pair of side wall portions 58 and the bottom wall portion 60 can be connected via the thick portion 56A, and the concave portion 48 can be provided with a greater thickness, and the concave portion 48 can be reinforced.

Further, in the present embodiment, the thick member 56 is structured by the plural thick portions 56A, and the thick portions 56A that are adjacent to one another are connected by the connecting portion 62 that is plate-shaped. Further, the thick portions 56A are fit into the concave portions 48 respectively, in a state in which the connecting portion 62 planarly contacts the bottom wall portions 60 of the concave portions 50. In this way, in the present embodiment, by providing the connecting portion 62 that connects the plural thick portions 56A, the plural thick portions 56A can substantially simultaneously be placed in the plural concave portions 48, and the mass producibility improves.

Moreover, in the present embodiment, the upper boards 32 that are shaped as flat plates are provided on the lower board 30 and cover the lower board 30 from the vehicle vertical direction upper side. Due thereto, the concave portions 48 are closed-off as the closed cross-sectional portions 52 by the upper boards 32. Note that the concave portions 50 are closed-off as the closed cross-sectional portions 54 by the upper wall portion 20B of the upper case 20.

Due to the concave portions 48 and 50 each having closed cross-sections in this way, in the present embodiment, at the floor portion 28 itself that includes the lower board 30 and the upper boards 32, the allowable bending moment can be increased, and the bending strength can be improved. Further, at the time of a side collision of the vehicle 10, the load transmitting performance at the floor portion 28 improves.

Note that, in the present embodiment, the upper boards 32 are disposed between the pairs of connecting portions 62 that are provided at the both end portions of the lower board 30, and the upper boards 32 and the connecting portions 62 have substantially the same plate thicknesses. Due thereto, in the present embodiment, the floor surface is formed to be flat.

### Supplementary Notes relating to Present Embodiment

In the present embodiment, as illustrated in Fig. 2, the thick members 56 that increase the plate thickness of the lower board 30 are provided respectively at the vehicle transverse direction end portions 30A of the front side lower board 44 and the rear side lower board 46 (the lower board 30). However, the thick members 56 do not necessarily have to be provided at the front side lower board 44 and the rear side lower board 46, and may be provided at either one thereof.

Further, in the present embodiment, as illustrated in Fig. 4, the thick portions 56A of the thick members 56 are provided within the concave portions 48 at the end portions 30A of the lower board 30. However, the thick portions 56A may be provided within the concave portions 50.

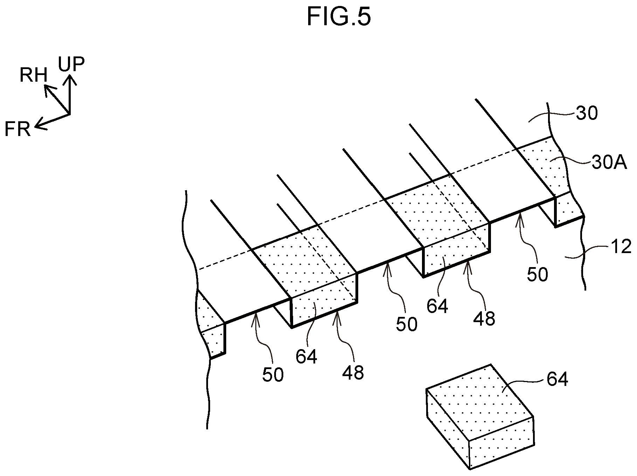

Moreover, although the plural thick portions 56A are connected by the connecting portion 62 in the present embodiment, the connecting portion 62 is not absolutely necessary. For example, as illustrated in Fig. 5 as modified example 1, thick members 64 formed in rectangular parallelopiped shapes may respectively be fit within the concave portions 48.

It is not absolutely necessary for the thick members 64 to be fit in the respective concave portions 48. For example, the thick portions 56A may be fit in every other one of the plural concave portions 48. Note that in Fig. 5 through Fig. 9, the surfaces of the thick members are marked with dots in order to differentiate them from other members.

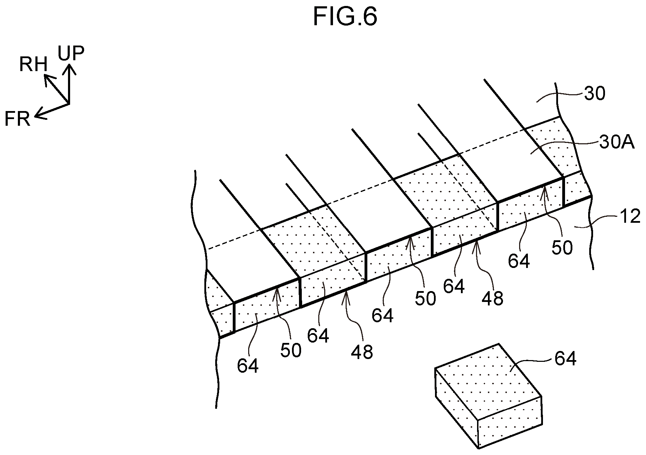

Moreover, as illustrated in Fig. 6 as modified example 2, the thick members 64 are not limited to being provided within the concave portions 48, and may be provided within the concave portions 50 as well. By providing the thick members (thick portions) 64 within not only the concave portions 48 but also the concave portions 50 at the end portions 30A of the lower board 30 in this way, the rigidity at the end portions 30A of the lower board 30 can be increased further.

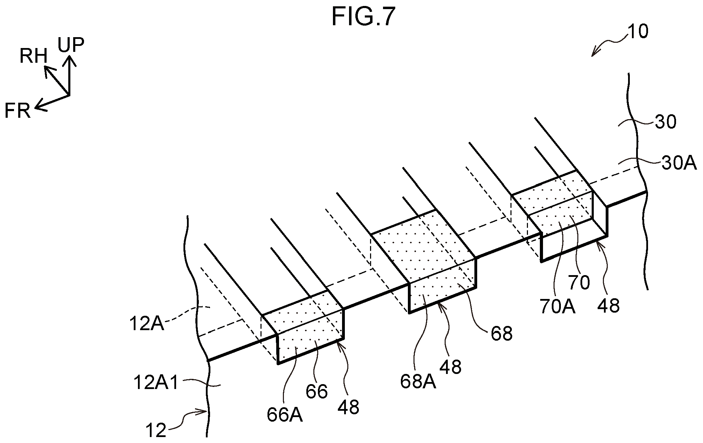

By the way, in the present embodiment, as illustrated in Fig. 2 and Fig. 4, the thick portions 56A are provided at the end portions 30A of the lower board 30 and are provided at the vehicle transverse direction outer sides of the upper surface 12A of the battery pack 12 as seen in a vehicle plan view. With regard to the placement of the thick portions in the present embodiment, as modified example 3 for example, thick members (thick portions) 66 illustrated in Fig. 7 may be provided further toward the vehicle transverse direction outer sides than the upper surface 12A of the battery pack 12 as seen in a vehicle plan view.

Further, as modified example 4, thick portions such as thick members (thick portions) 68 illustrated in Fig. 7 may be provided so as to overlap portions of the upper surface 12A of the battery pack 12 as seen in a vehicle plan view. Namely, the thick members 68 extend further toward vehicle transverse direction inner sides than end surfaces 12A1 of the upper surface 12A of the battery pack 12 as seen in a vehicle plan view. Due thereto, at the lower board 30, the bending strength is improved all the way to the battery pack 12 side, and, at the time of a side collision of the vehicle 10, load of the initial stage of the collision can be further suppressed so as to not be inputted toward the battery pack 12 side.

Moreover, it is preferable that the present embodiment be structured such that, as is the case with the thick members 66, 68, these thick members 66, 68 are fit into the concave portions 48 of the lower board 30 in states in which outer ends 66A, 68A thereof are substantially flush with the outer ends of the lower board 30. However, the present disclosure is not limited to this. For example, as with thick members (thick portions) 70 serving as modified example 5, outer ends 70A of the thick members 70 may be disposed further toward the vehicle transverse direction inner sides than the outer ends of the lower board 30. In such a case as well, provided that the thick members 70 are fit into the concave portions 48 of the end portions 30A of the lower board 30, the end portions 30A of the lower board 30 are reinforced in this case as well.

Further, in the present embodiment, as illustrated in Fig. 4, the thick portions 56A are formed in substantially rectangular parallelopiped shapes of sizes such that they can abut the pairs of side wall portions 58 and the bottom wall portions 60 of the concave portions 48. However, the thick portions 56A do not necessarily have to be rectangular parallelopiped.

For example, although not illustrated, the pair of side wall portions 58 and the bottom wall portion 60 can be connected, and the concave portion 48 can be reinforced, due to the thick member abutting at least the pair of side wall portions 58 and the bottom wall portion 60 that form the concave portion 48. Therefore, the cross-sectional shape of the thick member cut along the transverse direction may be a substantial U-shape.

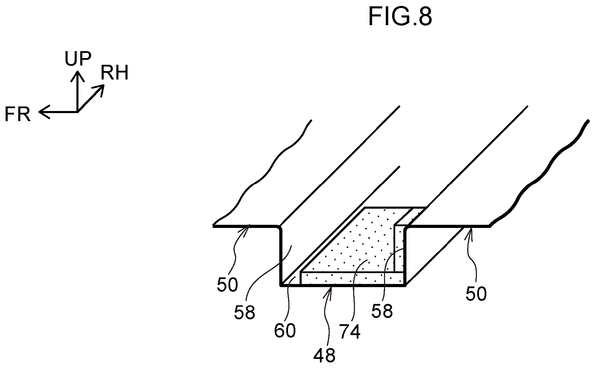

Further, as illustrated in Fig. 8 as modified example 6, a thick portion 74 may be provided at the bottom wall portion 60 and one side wall portion 58 of the pair of side wall portions 58 that form the concave portion 48. By providing the thick portion 74 at a portion of the concave portion 48 in this way, at least the concave portion 48 is reinforced. Therefore, at the time of a side collision of the vehicle 10, the effect of suppressing bending of the end portion 30A of the lower board 30 can be obtained. Note that, although not illustrated, thick portions may be provided respectively at the pair of side wall portions 58.

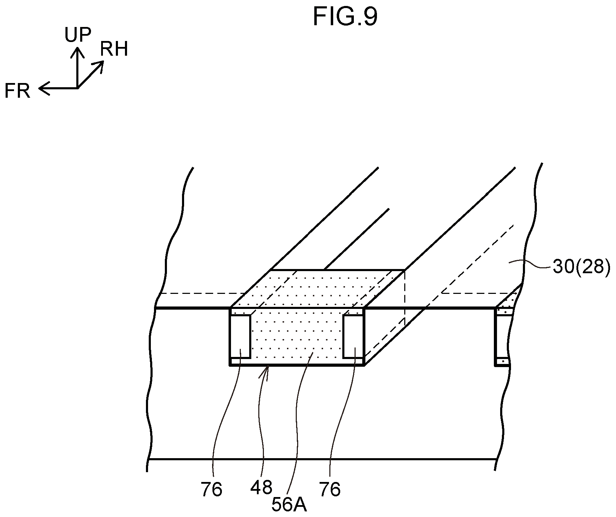

Moreover, the present embodiment describes a case in which the thick portion 56A is fit into the concave portion 48 as illustrated in Fig. 4. However, as illustrated in Fig. 9 as modified example 7, foamed bodies 76 may be provided between the thick portion 56A and the concave portion 48.

In this case, the foamed bodies 76 are expanded by being foamed by utilizing the temperature in the step of coating the floor portion 28, and the tight fit between the thick portions 56A and the concave portions 48 can be improved. Due thereto, the rigidity can be improved as compared with a case in which, for example, there are gaps between the thick portions 56A and the concave portions 48. Further, the thick portions 56A themselves may be formed by foamed bodies. Note that a material that is harder than the lower board 30 is selected as the material of the foamed body.

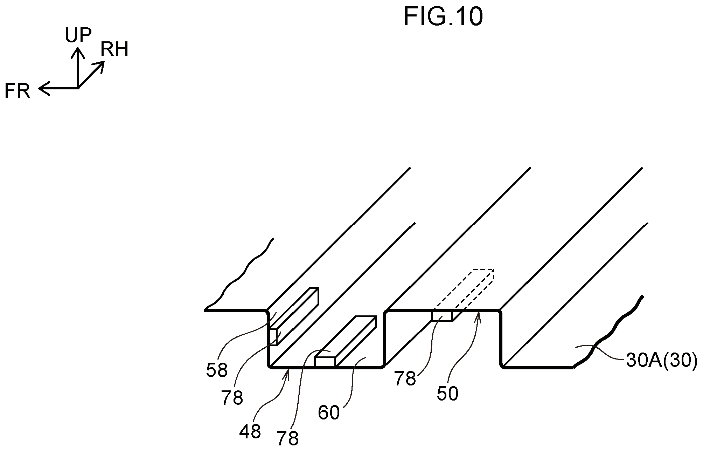

In the present embodiment, as illustrated in Fig. 4, the thick portions 56A of the thick member 56 are provided as bodies separate from the lower board 30. However, the thick portions 56A may be formed integrally with the lower board 30. For example, as illustrated in Fig. 10 as modified example 8, at the end portion 30A of the lower board 30, built-up portions (thick portions) 78 such as ribs or beads that extend in the vehicle transverse direction may be formed at the side wall portions 58 and the bottom wall portions 60 within the concave portions 48, 50.

In the present embodiment, as illustrated in Fig. 2, at the front side lower board 44 and the rear side lower board 46, the concave portions 48 and the concave portions 50 are formed continuously in a wavy shape along the vehicle longitudinal direction. However, the concave portions 48 and the concave portions 50 do not necessarily have to be formed continuously. Further, the lengths of the concave portions 48 and the concave portions 50 in the vehicle longitudinal direction may be different.

In the present embodiment, the seat cross members 34, 36 and the cross members 38, 40 are provided separately from the lower board 30. However, it suffices to be able to suppress bending of the vehicle transverse direction end portion 30A of the lower board 30 at the time of a side collision of the vehicle 10, and therefore, the present disclosure is not limited to this. For example, the lower board 30 may be the seat cross members 34, 36 and the cross members 38, 40.

As illustrated in Fig. 1, in the present embodiment, the thick members 56 are provided at the both vehicle transverse direction outer sides of the upper surface 12A of the battery pack 12 as seen in a vehicle plan view. However, the thick members 56 do not necessarily have to be at both vehicle transverse direction outer sides of the upper surface 12A of the battery pack 12. For example, the thick member 56 may be provided at only one vehicle transverse direction outer side of the upper surface 12A of the battery pack 12.

Although an example of an embodiment of the present disclosure has been described above, embodiments of the present disclosure are not limited to the above, and the embodiment and various modified examples may be combined appropriately. The present disclosure can, of course, be implemented in various forms within a scope that does not depart from the gist thereof.

## Claims

1. A vehicle lower portion structure comprising:
a battery pack (12) disposed at a lower portion (14) of a vehicle; and
a plate member (30) that is disposed at an upper side of the battery pack (12) and at which concave portions (48, 50), which are concave toward an upper side or a lower side in a vehicle vertical direction, extend in a vehicle transverse direction,
wherein thick portions (56A, 64, 66, 68, 70, 74, 78), which make a plate thickness of the plate member (30) thick, are provided at the concave portions (48, 50) at a vehicle transverse direction outer side of an upper surface of the battery pack (12) as seen in a vehicle plan view.

2. The vehicle lower portion structure according to claim 1, wherein the thick portions (56A, 64, 66, 68, 70) are provided as bodies separate from the plate member (30).

3. The vehicle lower portion structure according to claim 1 or 2, wherein the thick portions (68) extend to positions overlapping the upper surface of the battery pack (12) as seen in a vehicle plan view.

4. The vehicle lower portion structure according to any of claims 1 to 3, wherein each thick portion (56A, 64, 66, 68, 70) is provided so as be connected to a plurality of walls that structure a concave portion (48, 50).

5. The vehicle lower portion structure according to any of claims 1 to 4, wherein each thick portion (56A, 64, 66, 68, 70) is formed in a shape that is connected to a pair of side walls (58), which structure a concave portion (48, 50) and face one another, and to a bottom wall (60) that connects the pair of side walls.

6. The vehicle lower portion structure according to any of claims 1 to 5, wherein a plurality of the concave portions (48, 50) are provided in a vehicle longitudinal direction.

7. The vehicle lower portion structure according to any of claims 1 to 6, wherein the concave portions (48, 50) are formed continuously in a wavy shape along a vehicle longitudinal direction.

8. The vehicle lower portion structure according to any of claims 1 to 7, wherein the thick portions (56A, 64, 66, 68, 70, 74, 78) are provided respectively within concave portions (48) that are concave toward the lower side in the vehicle vertical direction.

9. The vehicle lower portion structure according to any of claims 1 to 8, comprising a connecting portion (62) that connects the plurality of thick portions (56A).

10. The vehicle lower portion structure according to any of claims 1 to 9, comprising a cover (32) that is shaped as a flat plate and covers the plate member (30) from the upper side in the vehicle vertical direction.

11. The vehicle lower portion structure according to claim 9, comprising a cover (32) that is shaped as a flat plate and covers the plate member (30) from the upper side in the vehicle vertical direction,
wherein the cover (32) is disposed between a pair of the connecting portions (62) that are provided at both vehicle transverse direction end portions of the plate member (30).

12. The vehicle lower portion structure according to any of claims 1 to 11, wherein each thick portion (56A) is fixed to the plate member (30) via a foamed body (76).

13. The vehicle lower portion structure according to claim 12, wherein the foamed body (76) is filled between a concave portion (48) and the thick portion (56A).
